# EUROPEAN PATENT APPLICATION

(11) **EP 4 692 147 A1**
(43) Date of publication of application: **11.02.2026**
(21) Application number: 24306332.8
(22) Date of filing: 07.08.2024
(51) Int. Cl.: C08G 18/20, C08G 18/40, C08G 18/42, C08G 18/48, C08G 18/62, C08G 18/76, C09J 175/06, C09J 175/08

(54) **REACTIVE POLYURETHANE HOT-MELT ADHESIVE COMPOSITION AND ARTICLE**

(71) Applicant: Bostik SA, 92800 Puteaux (FR)
(72) Inventor: CAO, Sheng, Shanghai, 201108 (CN); JIA, Chengliang, Shanghai, 201108 (CN)
(74) Representative: Arkema Patent

(57) **Abstract**

The present invention relates to a reactive polyurethane hot-melt adhesive composition and an article comprising an adhesive layer formed therefrom. The reactive polyurethane hot-melt adhesive composition is prepared by a raw material comprising the following components:
- a polyether polyol component (A) comprising at least one polyether polyol;
- a polyester polyol component (8) comprising :
∘ at least one crystalline polyester polyol (B1) having an onset crystallization temperature ranging from 35°C to 55°C;
∘ at least one crystalline polyester polyol (B2) having an onset crystallization temperature lower than 30°C;
∘ at least one non-crystalline polyester polyol (B3);

- an acrylic resin component (C) comprising at least one acrylic resin (C1), the acrylic resin (C1) comprising an active functional group which is reactive with an isocyanate group, the acrylic resin (C1) having a number average D90 particle size of no greater than 350 µm; and
- a polyisocyanate component (D) comprising at least one polyisocyanate.

## Description

### TECHNICAL FIELD

The present invention relates to a reactive polyurethane hot-melt adhesive composition, with good workability, especially suitable for the field of acoustic assembly. The present invention also relates to an article produced by applying the adhesive composition.

### BACKGROUND

Reactive polyurethane hot-melt adhesive ("HMPUR", hereinafter abbreviated as "hot-melt adhesive") generally comprises a urethane pre-polymer terminated with an isocyanate group as a main component, is coated when being heated to a molten state, has a certain initial tack, and produces a stronger adhesion after reacting with moisture in the air or on the surface of a substrate or other active hydrogen containing substances for curing. The reactive polyurethane hot-melt adhesive has been widely used in various industries, e.g. bookbinding, shoes and clothing making, wood panel processing, automotive interiors, acoustic and electronics industry.

The reactive polyurethane hot-melt adhesive has advantages of solvent-free, good flowability, high sizing efficiency, one component without need for glue preparation, rapid curing of an adhesive layer, low hot-shrinkage rate, low density, uniform stress transfer, and the like, depending on the nature of the raw material. At the same time, exhibits good adhesive strength to metal material of stainless steel, aluminum, and the like, as well as materials of ABS plastic, polycarbonate (PC), glass, and the like. Therefore, the reactive polyurethane hot-melt adhesive is particularly suitable for electronic assembly production line which is developing towards miniaturization, lightweight and efficient densification.

The current electronic assembly production line commonly employs jetting technology with high production efficiency, which dispenses/jets the hot-melt adhesive at a high speed and in a small amount using piezoelectric jetting valve to achieve a precise dispensing or an accurate filling. The precise piezoelectric injection dispensing valve usually has a small glue dispensing force and a small nozzle diameter (less than 0.5 mm, and even less than 0.2 mm). Accordingly, there are high requirements for viscosity, compatibility and flowability of the hot-melt adhesive, which needs to be ejected smoothly and maintain a certain shape. However, in practice, there are often problems that the hot-melt adhesive cannot be dispensed/jetted normally from the piezoelectric injection dispensing valve, the nozzle is clogged, and the like. Further, during jetting/dispensing, the hot-melt adhesive is heated to the molten state, which easily adheres to the nozzle of the piezoelectric jetting system, resulting in frequent shutdown and cleaning, which greatly affects the production efficiency. In addition, in the assembly of a precise electronic device, the amount of an adhesive used in each site is often small, and one hot-melt adhesive (typically packaged in a syringe, with 30 ml each) often needs to be used in the molten state for a long time, so the hot melt adhesive needs to have good thermal stability.

Besides, there is an increased desire to reduce carbon footprint and to produce products which are less toxic, more environmental-friendly. Raw materials derived from biomass are from a renewable source and have a reduced impact on the environment. They do not require all the energy-consuming refining stages of petroleum products. Production of CO₂ is reduced, so that they contribute less to global warming. However, such sustainability developments should not negatively impact the current properties of HMPUR, such as for example open time, bonding strength, ageing resistance, shear creep resistance, etc...

Moreover, the HMPUR on the market are prone to generate bubbles during curing. The bubbles will result in problems with appearance and air leakage in the bonding area.

There is thus a need for providing new reactive polyurethane hot melt adhesive that allows to resolve at least a part of the above-mentioned drawbacks.

There is a need for a reactive polyurethane hot-melt adhesive exhibiting a good compromise between good dispensing performance, high thermal stability, suitable open time, good ageing and shear creep resistance, reduced bubble formation during curing.

### DESCRIPTION OF THE INVENTION

In the present invention, a "polyester polyol" includes a polycaprolactone polyol, a polycarbonate polyol, and a product obtained by condensation reaction between a polyhydroxy compound and a polybasic acid. As for the reactants in the aforementioned condensation reaction, the polyhydroxy compound may be, for example, ethylene glycol, propylene glycol, butanediol, pentanediol, hexanediol, heptadiol, octanediol, nonanediol, decanediol, trimethylolpropane, trimethylolethane, glycerol, and the like, which can be used alone or in combination of two or more thereof; and the polybasic acid is preferably a diacid, which may be, for example, oxalic acid, malonic acid, succinic acid, adipic acid, sebacic acid, azelaic acid, Dodecanedioic acid, and the like. The aforementioned polycaprolactone polyol can be obtained by reaction of a compound having a hydroxyl group with ε-caprolactone. The polyester polyol can be divided into an aliphatic polyester polyol and an aromatic polyester polyol, according to whether it contains an aromatic ring structure or not.

In the present invention, a "crystalline polyester polyol" refers to a polyester polyol having a melt transition when measured using Differential Scanning Calorimetry (DSC). Preferably, the crystalline polyester polyol has a crystallinity greater than or equal to 10% and lower than or equal to 80% as measured according to ISO11357 (1:2023) by DSC.

In the present invention, a "non-crystalline polyester polyol" refers to a polyester polyol having no melt transition when measured using Differential Scanning Calorimetry (DSC).

In the present invention, a "number average D90 particle size" represents a particle size corresponding to 90% in a cumulative particle size distribution number, and the number of particles whose particle size is less than D90 accounts for 90% of the total sample. The number average D90 particle size herein is determined according to ISO 13320 using a laser particle size analyzer Microtrac S3500 utilizing a wet method (ethanol as carrier).

In the present invention, a viscosity is determined according to ISO 2555 at 110 °C using a DVT-II type Brookfield viscometer utilizing a 27 # rotor.

### Composition

The present invention relates to a reactive polyurethane hot-melt adhesive composition prepared by a raw material comprising the following components:
- a polyether polyol component (A) comprising at least one polyether polyol;
- a polyester polyol component (B) comprising :
   ∘ at least one crystalline polyester polyol (B1) having an onset crystallization temperature ranging from 35°C to 55°C;
   ∘ at least one crystalline polyester polyol (B2) having an onset crystallization temperature lower than 30°C;
   ∘ at least one non-crystalline polyester polyol (B3);
- an acrylic resin component (C) comprising at least one acrylic resin (C1), the acrylic resin (C1) comprising an active functional group which is reactive with an isocyanate group, the acrylic resin (C1) having a number average D90 particle size of no greater than 350 µm; and
- a polyisocyanate component (D) comprising at least one polyisocyanate.

### Polyether polyol component (A)

In the present invention, the polyether polyol component (A) comprises at least one polyether polyol.

The polyether polyol typically includes any polyether polyol available in the art.

Suitable polyether polyols include linear and/or branched polyethers having plural numbers of ether bonds and at least two hydroxyl groups, and contain substantially no functional group other than the hydroxyl groups. Examples of polyether polyol include polyoxyalkylene polyol (such as for example polyethylene glycol, polypropylene glycol, polytetramethylene glycol, polybutylene glycol, or mixtures thereof). Further, a homopolymer or a copolymer of the polyoxyalkylene polyols or mixtures thereof may also be employed. Particularly preferable copolymers of the polyoxyalkylene polyols may include an adduct of at least one compound selected from the group consisting of ethylene glycol, propylene glycol, diethylene glycol, dipropylene glycol, triethylene glycol, 2-ethylhexanediol-1,3-glycerin, 1,2,6-hexane triol, trimethylolpropane, trimethylol ethane, tris(hydroxyphenyl)propane, triethanolamine, triisopropanolamine, with at least one compound selected from the group consisting of ethylene oxide, propylene oxide, and butylene oxide. While such compounds are commercially available, methods for synthesizing such compounds are very well known in the art.

The polyether polyol preferably has a number average molecular weight in the range of 200 to 8 000 g/mol, more preferably in the range of 500 to 5 000 g/mol, even more preferably in the range of 700 to 3 000 g/mol, more advantageously in the range of 1 500 to 2 800 g/mol.

Preferably, the polyether polyol is liquid at 25°C and at standard atmospheric pressure. Preferably, the polyether polyol has a density ranging from 0.9 to 1.1 mg/ml at 25°C.

Preferably, the polyether polyol comprises a homopolymer of propylene oxide with a number average molecular weight ranging from 500 to 5 000 g/mol.

The polyether polyol can be commercially available, such as Voranol series from Dow Chemical Company, and Wanol series from Wanhua.

The polyether polyol component (A) may comprise one or two polyether polyols, such as two polyether polyols with different number average molecular weights.

The total content of the polyether polyol component (A) is preferably in a range of 15 to 35 wt%, more preferably in the range of 18 to 30 wt%, even more preferably in the range of 20 to 29 wt%, e.g., 15, 18, 20, 23, 25, 28, 29, 30, 35 wt%, based on the total weight of the components (A) to (D).

### Polyester polyol component (B)

In the present invention, the polyester polyol component (B) comprises:
∘ at least one crystalline polyester polyol (B1) having an onset crystallization temperature ranging from 35°C to 55°C;
∘ at least one crystalline polyester polyol (B2) having an onset crystallization temperature lower than 30°C;
∘ at least one non-crystalline polyester polyol (B3).

Thus, the polyester polyol component (B) comprises at least three different polyester polyols : (B1), (B2) and (B3).

### Polyester polyol (B1)

The crystalline polyester polyol (B1) typically includes any crystalline polyester polyol available in the art having the required onset crystallization temperature.

The onset crystallization temperature is measured by DSC (Differential Scanning Calorimetry (DSC) according to ISO 11357 (1:2023) with a temperature rise and fall speed of 20°C/min, using in particular Q2000 TA Instruments as equipment.

The onset crystallization temperature is determined particularly by taking at the intersection of (a) a straight line extending from the high temperature side baseline to the low temperature side baseline and (b) the tangent line drawn through the point of maximum slope of the curve on the high-temperature side of the crystallization peak.

Preferably, the crystalline polyester polyol (B1) has an onset crystallization temperature ranging from 38°C to 55°C, more preferably from 40°C to 50°C, e.g., 38, 39, 40, 41, 42, 43, 44, 45, 46, 47, 48, 49, 50, 51, 52, 53, 54, 55°C.

The polyester polyol (B1) has preferably a crystallinity in the range of 20% to 80%, more preferably in the range of 30% to 60%.

Preferably, the polyester polyol (B1) has a melting point in a range of 40°C to 120°C, more preferably of 45°C to 100°C, and even more preferably of 50°C to 80°C, e.g, 40, 45, 50, 52, 55, 57, 60, 63, 65, 68, 70, 73, 75, 77, 80, 85, 90, 95, 100, 105, 110, 115, 120°C. The melting point may be measured by DSC.

The polyester polyol (B1) may be prepared by condensation reaction between at least one diol and at least one dicarboxylic acid.

Preferably, the dicarboxylic acid is a linear dicarboxylic acid having from 2 to 12 carbon atoms. The dicarboxylic acid is preferably selected from the group consisting of adipic acid, sebacic acid, succinic acid, decanedioic acid, dodecanedioic acid, and mixtures thereof.

The diol is preferably selected from linear aliphatic diol having from 2 to 12 carbon atoms, more preferably from 2 to 6 carbon atoms. Specific examples of diol include ethylene glycol, 1,3-propanediol, 1,4-butanediol, 1,5-pentanediol, 1,6-hexanediol, 1,8-octanediol, 1,10-decanediol, 1,12-dodecanediol, and mixtures thereof.

Preferably, the polyester polyol (B1) is prepared by condensation reaction between at least one dicarboxylic acid selected from sebacic acid, dodecanedioic acid, and mixtures thereof, and at least one diol selected from 1,3-propanediol, and 1,4-butanediol, and mixtures thereof.

The number average molecular weight of the polyester polyol (B1) is preferably in the range of 1 000 to 10 000 g/mol, more preferably in the range of 1 500 to 6 000 g/mol, even more preferably in the range of 1 500 to 4 000 g/mol, more advantageously in a range of 1 500 to 2 800 g/mol.

Preferably, the polyester polyol (B1) has a bio-based content greater than or equal to 50%, more preferably greater than or equal to 80%. Even more preferably, the polyester polyol (B1) is 100% bio-based.

The bio-based content (also known as biomaterial content or biocarbon content) is determined by using the standard ASTM D 6866.

Commercially available crystalline polyester polyols (B1) include for example polyester polyols from Huafeng, XuChuan and Eternal.

The total content of polyester polyol (B1) preferably ranges from 2 to 40 wt%, more preferably from 5 to 35 wt%, e.g., 2, 5, 10, 12, 15, 18, 20, 23, 25, 28, 30, 32, 35 wt% based on the total weight of components (A) to (D).

### Polyester polyol (B2)

The crystalline polyester polyol (B2) typically includes any crystalline polyester polyol available in the art having the required onset crystallization temperature.

Preferably, the crystalline polyester polyol (B2) has an onset crystallization temperature ranging from -20°C to less than 30°C, more preferably from -15°C to less than 28°C, more preferably from -10°C to less than 25°C, e.g., 30, 29, 28, 27, 25, 22, 20, 18, 15, 10, 5, 0, -2, -5, -10, -12, -15, -20°C.

The polyester polyol (B2) has preferably a crystallinity in the range of 20% to 80%, more preferably in the range of 30% to 60%.

Preferably, the polyester polyol (B2) has a melting point in a range of 10°C to 120°C, more preferably of 10°C to 100°C, and even more preferably of 10°C to 80°C. The melting point may be measured by DSC.

The polyester polyol (B2) may be prepared by condensation reaction between at least one diol and at least one dicarboxylic acid.

Preferably, the dicarboxylic acid is a linear dicarboxylic acid having from 2 to 12 carbon atoms. The dicarboxylic acid is preferably selected from the group consisting of adipic acid, sebacic acid, succinic acid, decanedioic acid, dodecanedioic acid, and mixtures thereof.

The diol is preferably selected from linear aliphatic diol having from 2 to 12 carbon atoms, more preferably from 2 to 6 carbon atoms. Specific examples of diol include ethylene glycol, 1,3-propanediol, 1,4-butanediol, 1,5-pentanediol, 1,6-hexanediol, 1,8-octanediol, 1,10-decanediol, 1,12-dodecanediol, and mixtures thereof.

Preferably, the polyester polyol (B2) is prepared by condensation reaction between at least one dicarboxylic acid selected from sebacic acid, succinic acid, and mixtures thereof, and at least one diol selected from 1,3-propanediol, and 1,4-butanediol, and mixtures thereof.

The number average molecular weight of the polyester polyol (B2) is preferably in the range of 1 000 to 10 000 g/mol, more preferably in the range of 1 500 to 6 000 g/mol, even more preferably in the range of 1 500 to 4 000 g/mol, more advantageously in a range of 1 500 to 2 800 g/mol.

Preferably, the polyester polyol (B2) has a bio-based content greater than or equal to 50%, more preferably greater than or equal to 80%. Even more preferably, the polyester polyol (B2) is 100% bio-based.

The bio-based content (also known as biomaterial content or biocarbon content) is determined by using the standard ASTM D 6866.

Commercially available crystalline polyester polyols (B2) include for example polyester polyols from Huafeng (e.g., PE-6056, PE-06156, PE-06256) or from XuChuan (e.g., CTP-B2000-BJS).

The total content of polyester polyol (B2) preferably ranges from 2 to 40 wt%, more preferably from 2 to 30 wt%, e.g, 2, 5, 7, 9, 10. 12, 15, 18, 20, 25, 30, 35, 40 wt% based on the total weight of components (A) to (D).

### Polyester polyol (B3)

The polyester polyol (B3) is a non-crystalline polyester polyol. The non-crystalline polyester polyol typically includes any non-crystalline polyester polyol available in the art.

Preferably, the non-crystalline polyester polyol (B3) is obtained by reacting a dicarboxylic acid (an aromatic dicarboxylic acid and/or an aliphatic dicarboxylic acid) with a polyol.

The dicarboxylic acid may be selected from the group consisting of adipic acid, succinic acid, azelaic acid, sebacic acid, dodecanedioic acid, tetradecanedioic acid, octadecane dioic acid, isophthalic acid, terephthalic acid, dimerized fatty acid, trimerized fatty acid, and mixtures thereof.

Dimerized fatty acids are the dimerization product of mono or polyunsaturated acids and/or esters thereof. Preferred dimerized fatty acids are dimers of C10- to C36-, more preferably C12- to C24- alkyl chains. Suitable dimerized fatty acids include the dimerization of products of oleic acid, linoleic acid, linolenic acid, palmitoleic acid, oleic acid.

The polyol is preferably selected from linear aliphatic diol having from 2 to 12 carbon atoms, more preferably from 2 to 6 carbon atoms. Specific examples of diol include ethylene glycol, 1,3-propanediol, 1,4-butanediol, 1,5-pentanediol, 1,6-hexanediol, 1,8-octanediol, 1,10-decanediol, 1,12-dodecanediol, and mixtures thereof.

The number average molecular weight of the polyester polyol (B3) is preferably in the range of 1 000 to 8 000 g/mol, more preferably in the range of 1 500 to 7 000 g/mol, even more preferably in the range of 1 600 to 4 000 g/mol, more advantageously in a range of 1 800 to 3 000 g/mol.

Commercially available non-crystalline polyester polyol (B3) includes Dynacoll^{®} 7110, 7130, 7140, and the like from Evonik, Priplast series from Cargill/Croda, amorphous polyester polyols in Desmophen series from Covestro, Stepapol series from Stepan, and the like.

Preferably, the polyester polyol (B3) has a bio-based content greater than or equal to 50%, more preferably greater than or equal to 80%. Even more preferably, the polyester polyol (B3) is 100% bio-based.

The bio-based content (also known as biomaterial content or biocarbon content) is determined by using the standard ASTM D 6866.

The content of polyester polyol (B3) preferably ranges from 5 to 40 wt%, more preferably from 10 to 35 wt%, e.g., 5, 10, 12, 15, 18, 20, 22, 25, 28, 30, 35, 40 wt%, based on the total weight of components (A) to (D).

The content of the polyester polyol component (B) is preferably in the range of 10 to 60 wt%, more preferably in the range of 25 to 55 wt%, and more advantageously in a range of 33 to 55 wt%, e.g., 10, 20, 25, 30, 35, 40, 42, 45, 48, 50, 52, 55 wt%, based on the total weight of the components (A) to (D).

In the polyester polyol component (B), the weight ratio of the crystalline polyester polyol (B1) to the crystalline polyester polyol (B2) is preferably greater than 0.8, more preferably ranges from 0.8 to 6.

In an embodiment, in the polyester polyol component (B), the melting temperature of polyester polyol (B2) is higher than 50°C, preferably higher than 56°C, and the weight ratio of the crystalline polyester polyol (B1) to the crystalline polyester polyol (B2) is higher than 0.8, preferably higher than 0.9, e.g., 1 to 5, e.g., 0.8, 0.9, 1, 2, 2.5, 3, 3.5, 4, 4.5, 5.

In an embodiment, in the polyester polyol component (B), the melting temperature of polyester polyol (B2) is lower than 49°C, preferably lower than 25°C, and the weight ratio of the crystalline polyester polyol (B1) to the crystalline polyester polyol (B2) is higher than 1, preferably higher than 1.5, e.g., 1.5 to 5, e.g., 1, 1.2, 1.5, 2, 2.5, 3, 3.5, 4, 4.5, 5.

### Acrylic resin component (C)

In the present invention, the acrylic resin component (C) comprises at least one acrylic resin (C1). The acrylic resin (C1) comprises an active functional group which is reactive with an isocyanate group, and its number average D90 particle size is no greater than 350 µm.

Preferably, its number average D90 particle size is no greater than 250 µm, preferably no greater than 210 µm, more preferably in a range of 100 to 210 µm, most preferably in a range of 120 to 200 µm, extremely preferably in a range of 160 to 200 µm. For example, the acrylic resin (C1) has a number average D90 particle size of 100, 110, 120, 130, 140, 150, 160, 170, 180, 190, 200, 210 µm.

The active functional group which is reactive with an isocyanate group includes hydroxyl group, amino group, and the other functional groups having active hydrogen. Preferably, the active functional group which is reactive with an isocyanate group comprises one or two of hydroxyl group and amino group, and more preferably comprises the hydroxyl group, that is, the acrylic resin (C1) contains hydroxyl functional group. When preparing the adhesive composition of the invention, the active functional group contained in the acrylic resin (C1) may react with the polyisocyanate in the polyisocyanate component (D) to form a pre-polymer with a urethane structure, but it cannot be ensured that all the acrylic resin (C1) will form the pre-polymer with the urethane structure.

The acrylic resin (C1) is present in the form of extremely small particle or powder. The shape of the particle is not particularly limited, and can include, for example, spherical shape, ellipsoidal shape, and the like.

Preferably, the acrylic resin (C1) has a hydroxyl value ranging from 1 to 10 mg KOH/g, more preferably from 2 to 10 mg KOH/g, and even more preferably from 4 to 10 mg KOH/g, e.g., 5, 6, 7, 8, 9, 10 mg KOH/g.

The acrylic resin (C1) can be obtained by polymerizing a hydroxyl-containing (meth)acrylic compound as a constituent monomer and optionally the other (meth)acrylic compound. In the present invention, "(meth)acrylic compound" represents one or both of methacrylic compound and acrylic compound. Examples of the hydroxyl-containing (meth)acrylic compounds include 2-hydroxyethyl (meth)acrylate, 3-hydroxypropyl (meth)acrylate, 4-hydroxybutyl (meth)acrylate, and the like. Examples of the other (meth)acrylic compound include methyl (meth)acrylate, ethyl (meth)acrylate, propyl (meth)acrylate, butyl (meth)acrylate, (meth)acrylic acid, and the like.

The acrylic resin (C1) has preferably a weight average molecular weight in the range of 3 000 to 80 000 g/mol, more preferably of 5 000 to 60 000 g/mol, and even more preferably of 5000 to 50 000 g/mol, e.g., 15 000, 25 000, 30 000, 35 000, 40 000, 45 000 g/mol.

The content of the acrylic resin (C1) is preferably in the range of 3 to 25 wt%, more preferably of 5 to 20 wt%, and even more preferably of 5 wt% to 15 wt%, e.g., 3, 5, 7, 8, 9, 10, 11, 12, 15, 18, 20, 25 wt%, based on the total weight of the components (A) to (D).

The acrylic resin (C1) has preferably a glass transition temperature (Tg) of 30 to 110°C, preferably 40 to 80°C, more preferably 45 to 58°C, e.g., 45, 50, 53, 55, 56, 57, 58, 59, 60, 62, 65, 68, 70, 72, 75, 78, 80°C. The glass transition temperature could be tested in a way conventionally in the art, e.g., the differential scanning calorimetry (DSC) method with heating rate of about 10 °C/min.

In an embodiment, the acrylic resin (C1) has a number average D90 particle size of no greater than 350 µm, with a Tg ranging from 30 to 110°C.

In an embodiment, the acrylic resin (C1) has a number average D90 particle size of no greater than 250 µm, with a Tg ranging from 30 to 110°C.

In an embodiment, the acrylic resin (C1) has a number average D90 particle size of no greater than 210 µm, with a Tg ranging from 30 to 110°C.

In an embodiment, the acrylic resin (C1) has a number average D90 particle size in a range of from 100 µm to 210 µm, with Tg ranging from 30 to 110°C.

In an embodiment, the acrylic resin (C1) has a number average D90 particle size in a range of from 120 µm to 210 µm, with Tg ranging from 30 to 110°C.

In an embodiment, the acrylic resin (C1) has a number average D90 particle size in a range of from 160 µm to 210 µm, with Tg ranging from 30 to 110°C.

In an embodiment, the acrylic resin (C1) has a number average D90 particle size of no greater than 350 µm, with Tg ranging from 40 to 80°C.

In an embodiment, the acrylic resin (C1) has a number average D90 particle size of no greater than 250 µm, with Tg ranging from 40 to 80°C.

In an embodiment, the acrylic resin (C1) has a number average D90 particle size of no greater than 210 µm, with Tg ranging from 40 to 80°C.

In an embodiment, the acrylic resin (C1) has a number average D90 particle size of from 100 µm to 210 µm, with Tg ranging from 40 to 80°C.

In an embodiment, the acrylic resin (C1) has a number average D90 particle size of from 120 µm to 200 µm, with Tg ranging from 40 to 80°C.

In an embodiment, the acrylic resin (C1) has a number average D90 particle size in a range of from 160 µm to 210 µm, with Tg ranging from 40 to 80°C.

In an embodiment, the acrylic resin (C1) has a number average D90 particle size of no greater than 350 µm, with Tg ranging from 45 to 58°C.

In an embodiment, the acrylic resin (C1) has a number average D90 particle size of no greater than 250 µm, with Tg ranging from 45 to 58°C.

In an embodiment, the acrylic resin (C1) has a number average D90 particle size of no greater than 210 µm, with Tg ranging from 45 to 58°C.

In an embodiment, the acrylic resin (C1) has a number average D90 particle size of from 100 µm to 210 µm, with Tg ranging from 45 to 58°C.

The acrylic resin component (C) may further comprise at least one acrylic resin (C2) which is substantially free of the active functional group which is reactive with an isocyanate group. The expression "substantially free of" means that the acrylic resin (C2) contains less than 5 wt%, preferably less than 3 wt%, and more preferably less than 1 wt% of the active functional group which is reactive with an isocyanate group. The difference between the acrylic resins (C1) and (C2) lies in whether it contains the active functional group which is reactive with an isocyanate group. When preparing the adhesive composition of the present invention, the acrylic resin (C2) does not react with the polyisocyanate in the polyisocyanate component (D), and thus the acrylic resin (C2) will exist in the resulting composition. The weight average molecular weight of the acrylic resin (C2) is not particularly limited, and the acrylic resin (C2) with an appropriate molecular weight can be generally selected in order to obtain a desired viscosity from the prepared composition.

Preferably, the acrylic resin component (C) may be composed of the acrylic resin (C1) or may be composed of the acrylic resin (C1) and the acrylic resin (C2).

When the acrylic resin component (C) comprises the acrylic resin (C1) and the acrylic resin (C2), a ratio of the acrylic resin (C1) to the acrylic resin (C2) is not particularly limited, and may be, for example, in a range of 1:9 to 9:1, 2:8 to 8:2, 3:7 to 7:3, or 4:6 to 6:4, by weight.

### Polyisocyanate component (D)

In the present invention, the polyisocyanate component (D) comprises at least one polyisocyanate.

The polyisocyanate includes an isocyanate compound having two or more isocyanate groups (-NCO), as well as oligomers or polymers formed therefrom, such as trimers. The polyisocyanate may be aliphatic, aromatic, or mixtures thereof. The polyisocyanate may also comprise other substituents which do not significantly and adversely affect the performance of the composition of the present invention such as viscosity or adhesion. Examples of the polyisocyanate include: diphenylmethane diisocyanate compounds (MDI) and their isomers, diphenylmethane 4,4'-diisocyanate, diphenylmethane-2,2'-diisocyanate, diphenylmethane-2,4'-diisocyanate, and other oligomeric methylene isocyanates; toluene diisocyanate compounds (TDI) including their isomers, isophorone diisocyanates, and hydrogenated aromatic diisocyanates. The at least one polyisocyanate in the component (D) is preferably an aromatic polyisocyanate, more preferably a linear aromatic isocyanate compound. Without being bounded by theory, the inventors believe that use of the aromatic polyisocyanate in the component (D) can make the adhesive composition of the present invention have good bonding strength and heat resistance.

The content of the polyisocyanate component (D) is preferably in the range of 12 to 30 wt%, more preferably of 15 to 25 wt%, even more preferably of 16 to 23 wt%, and more advantageously of 17 to 20 wt%, e.g., 12, 15, 16, 17, 18, 19, 20, 21, 22, 23, 25, 28, 30 wt%, based on the total weight of the components (A) to (D).

In the process of preparing the composition of the invention using the components (A) to (D), the hydroxyl group and/or the other active functional group in the components (A) to (C) will react with the isocyanate group in component (D) to generate a pre-polymer with a urethane structure. In the components (A) to (D) of the present invention, the equivalent ratio of the isocyanate groups to the hydroxyl groups (NCO/OH) is preferably from 1.2 to 6, preferably from 1.5 to 5, and more preferably from 1.7 to 3, to provide an adhesive composition containing the isocyanate group.

In some embodiments of the present invention, the adhesive composition has a free NCO content of 1% to 5%, preferably of 2% to 4%.The free NCO refers to the remaining isocyanate group after the components (A) to (D) are mixed and the isocyanate groups react with the hydroxyl groups at the equivalent ratio of 1:1. The "free NCO content" is a weight percentage of the isocyanate groups present in the adhesive composition based on 100 wt% of the total weight of the composition, and can be used to characterize the effectiveness of the reactive polyurethane hot-melt adhesive. A higher free NCO content means that the adhesive composition of the present invention has a higher degree of crosslinking after curing, and thus has better heat resistance and creep resistance.

### Optional ingredients

The reactive polyurethane hot melt adhesive composition of the present invention may comprise one or several optional components, provided that presence of these components does not adversely affect the physical performance of the adhesive composition of the present invention such as initial tack, thermal stability, and the like: catalysts, antioxidants, tackifiers, plasticizers, stabilizers, UV absorbers, fillers, dyes, pigments, fluorescent agents, deodorants, adhesion promoters (such as silane coupling agents), surfactants, defoamers, waxes, thermoplastic resins, and the like. Examples of the catalysts include, but are not limited to, nitrogen-containing compounds such as triethylamine, triethylenediamine, and N-methylmorpholine; metal salts such as potassium acetate, zinc stearate, and tin octanoate; and organometallic compounds such as dibutyltin dilaurate. Preferably, the catalysts comprise ether and morpholine functional groups, such as 2,2-dimorpholinyl ethyl ether, di(2,6-dimethylmorpholinyl ethyl) ether, and 4,4'-(oxy-di-2,1-ethanediyl)bis-morpholine (DMDEE). The amount of the catalysts added is in a range of 0.01-2 wt%, based on the total weight of the adhesive composition. The addition of the antioxidants can protect the adhesive composition from degradation induced by, for example, heat, light or residual catalysts in the raw material. The antioxidants may be hindered phenolic antioxidants, phosphite antioxidants, thioether antioxidants, and the like. Examples of commercially available antioxidants include Irganox 565, 1010, and 1076 from Ciba Corporation. The fillers include talc, clay, silica and their treated forms, carbon black, and mica.

The content of optional component(s) is preferably less than 5 wt% based on the total weight of the composition.

The reactive polyurethane hot-melt adhesive composition of the present invention may be bio-based. Preferably, its bio-based content is 30% or greater, more preferably 40% or greater, even more preferably 50% or greater, the bio-based content being determined according to ASTM D6866. More specifically, the bio-based content of each component being determined according to ASTM D6866, the bio-based content of the composition is the sum of (bio-based content of every component× the weight percentages of the component in the composition).

The reactive polyurethane hot-melt adhesive composition of the invention has typically a viscosity suitable for dispensing. Preferably, its viscosity at 110 °C is in the range of 1 500 to 10 000 mPa.s, more preferably in the range of 1 500 to 8 000 mPa.s, and more preferably in the range of 1 500 to 5 000 mPa.s, wherein the viscosity is determined according to ISO 2555 using a DVT-II type Brookfield viscometer utilizing a 27 # rotor.

Preferably, the reactive polyurethane hot melt adhesive composition is prepared by a raw material comprising the following components:
- from 15 to 35 % by weight of polyether polyol component (A) as defined above,
- from 10% to 60% by weight of polyester polyol component (B) as defined above,
- from 3% to 25 % by weight of acrylic resin (C1) as defined above,
- from 12 % to 30% by weight of polyisocyanate component (D) as defined above,
wherein the equivalent ratio of the isocyanate groups to hydroxyl groups (NCO/OH) of the above components is from 1.2 to 6.

More preferably, the reactive polyurethane hot melt adhesive composition is prepared by a raw material comprising the following components:
- from 18% to 30 % by weight of polyether polyol component (A) as defined above,
- from 25% to 55% by weight of polyester polyol component (B) as defined above,
- from 5% to 20 % by weight of acrylic resin (C1) as defined above,
- from 15 % to 25% by weight of polyisocyanate component (D) as defined above,
wherein the equivalent ratio of the isocyanate groups to hydroxyl groups (NCO/OH) of the above components is from 1.2 to 6.

Even more preferably, the reactive polyurethane hot melt adhesive composition is prepared by a raw material comprising the following components:
- from 20% to 29 % by weight of polyether polyol component (A) as defined above,
- from 33% to 55% by weight of polyester polyol component (B) as defined above,
- from 5% to 15 % by weight of acrylic resin (C1) as defined above,
- from 16 % to 23% by weight of polyisocyanate component (D) as defined above,
wherein the equivalent ratio of the isocyanate groups to hydroxyl groups (NCO/OH) of the above components is from 1.2 to 6.

With regard to the preparation of the reactive polyurethane hot-melt adhesive composition of the invention, in an embodiment, it may be carried out in the following way: pre-mixing the components (A), (B), and (C), dehydrating, then adding the component (D) while heating for reaction, and finally adding the optional additives, fillers, and the like, to prepare the adhesive composition. The adhesive composition may be packaged in a moisture-proof container, such as a high-temperature resistant plastic needle tube. The above reaction process is usually carried out under a solvent-free condition.

The hot melt adhesive composition of the present invention advantageously allows to exhibit at least one of the following properties:
- good initial tack (Green Strength, bonding strength before curing),
- good bonding strength after curing (preferably higher than 5 MPa according to the method disclosed in the example),
- good aging resistance preferably higher than 3.0 MPa after exposure under high temperature (85°C) and high humidity (85% RH);
- good thermal stability (preferably less than 50% of growth rate between initial viscosity and viscosity after 6h),
- suitable open time (preferably comprised between 4 to 9 minutes according to the method disclosed in the example): there exists certain distance between different production line workstation. After applying the glue, the samples need a certain time to go to the next workstation for assembly. If open time is too short (such as for example less than 3 min), the glue has already dried and there will be no possibility for adhesion. If open time is too long (for example more than 10 min), it will affect production efficiency,
- good dispensing properties: not prone to clog the nozzle and not prone to occur nozzle clog (this is particularly suitable for use in a precise assembly line of the electronic/acoustic industry, and advantageously contributes to improve production efficiency by reducing regular cleaning steps),
- reduced or even no formation of bubble during curing.
- good shear creep resistance preferably duration period of more than 4h, more preferably 8h, after exposure under high temperature (85°C) and high humidity (85% RH).

### Uses

An application method of the reactive polyurethane hot-melt adhesive composition of the invention includes: firstly, heating and melting the reactive polyurethane hot-melt adhesive composition of the invention in a temperature range of 50 to 130°C, coating it on a first substrate; attaching a second substrate to the composition; and selecting to apply a pressure to bonding the first substrate and the second substrate or not according to need. Coating the adhesive composition of the present invention on the first substrate may be carried out on a flat surface or in a narrow groove. The above coating may be performed, for example, using a roller coater, a spray coater, a T-shaped die coater, a blade coater, a comma coater, or the like, or may also be performed by means of distribution, inkjet printing, screen printing, offset printing, or the like. The composition of the present invention is particularly suitable for coating using a piezoelectric injection system. When coating, the moisture curable polyurethane hot-melt resin composition of the present invention may be continuously or discontinuously formed on a component in various shapes such as dot, line, triangle, quadrangle, circle, curve, or the like.

Another aspect of the present invention relates to an article, comprising a first substrate and an adhesive layer on the first substrate formed by curing the reactive polyurethane hot-melt adhesive composition as defined herein.

In an embodiment, the article comprises the first substrate, a second substrate, and the adhesive layer between the first substrate and the second substrate formed by curing the reactive polyurethane hot-melt adhesive composition of the present invention. The first substrate and the second substrate are each respectively selected from various materials such as metal, glass, inorganic building material, plastic, fiber, composite material, and the like. The substrate may be subjected to corona treatment, plasma treatment, primer treatment, or the like, as desired. The thickness of the adhesive layer can be set according to specific application needs. In an embodiment, the adhesive layer is coated onto the first substrate by dispensing the reactive polyurethane hot-melt adhesive composition of the present invention via jetting/dispensing. The adhesive layer has preferably the thickness in a range of from 0.01 to 2 mm, more preferably in a range of from 0.05 to 1 mm, and even more preferably in a range of from 0.1 to 0.5 mm. In an embodiment, the adhesive layer is formed by coating the reactive polyurethane hot-melt adhesive composition of the present invention on the first substrate through a piezoelectric injection system and then curing. The article of the present invention includes, but is not limited to, various electronic devices, such as mobile phone, computer, headphone, television, camera, automotive electronic component, and the like.

The present invention also relates to the use of a polyester polyol in a reactive polyurethane hot melt adhesive composition for acoustic assembly, wherein the polyester polyol is prepared by a bio-based dodecanedioic acid and a bio-based 1,3-propylene glycol. Preferably, the dodecanedioic acid is 100% bio-based and/or the 1,3-propylene glycol is 100% bio-based.

The present invention also relates to the use of a polyester polyol in a reactive polyurethane hot melt adhesive composition for acoustic assembly, wherein the polyester polyol is prepared by a bio-based dicarboxylic acid selected from sebacic acid, and/or succinic acid and a bio-based diol selected from 1,3-propanediol, and/or 1,4-butanediol. Preferably, the dicarboxylic acid is 100% bio-based and/or the diol is 100% bio-based.

Preferably, the reactive polyurethane hot melt adhesive composition exhibits at least one of the following features:
- no formation of bubble;
- an open time ranging from 4 to 9 min.

Preferably, the reactive polyurethane hot melt adhesive composition comprises at least one acrylic resin, the acrylic resin comprising an active functional group which is reactive with an isocyanate group; the acrylic resin having a number average D90 particle size of no greater than 350 microns.

More preferably, the reactive polyurethane hot melt adhesive composition is as defined above.

The present invention also relates to the use of a reactive polyurethane hot melt adhesive composition in acoustic assembly, wherein the composition contains a urethane prepolymer having an isocyanate group, which is the reaction product of a polyol and a polyisocyanate, the polyol comprising a polyester polyol obtained from bio-based dodecanedioic acid and bio-based 1,3-propylene glycol. Preferably, the dodecanedioic acid is 100% bio-based and/or the 1,3-propylene glycol is 100% bio-based.

The present invention also relates to the use of a reactive polyurethane hot melt adhesive composition in acoustic assembly, wherein the composition contains an urethane prepolymer having an isocyanate group, which is the reaction product of a polyol and a polyisocyanate, the polyol comprising a polyester polyol obtained from a bio-based dicarboxylic acid selected from sebacic acid, and/or succinic acid and a bio-based diol selected from 1,3-propanediol, and/or 1,4-butanediol. Preferably, the dicarboxylic acid is 100% bio-based and/or the diol is 100% bio-based.

Preferably, the reactive polyurethane hot melt adhesive composition exhibits at least one of the following features:
- no formation of bubble;
- an open time ranging from 4 to 9 min.

Preferably, the reactive polyurethane hot melt adhesive composition comprises at least one acrylic resin, the acrylic resin comprising an active functional group which is reactive with an isocyanate group; the acrylic resin having a number average D90 particle size of no greater than 350 microns.

More preferably, the reactive polyurethane hot melt adhesive composition is as defined above.

The present invention would be further illustrated in detail below through examples. The following examples are not to limit the scope of the present invention.

The ranges disclosed in this description include both the lower and the upper limit thereof. For example, the expressions "ranging from x to y" or "between x and y" or "of x to y" comprises the limits x and y.

### Examples

### Raw materials

| Raw materials | Grade | Supplier | Chemical information |
|---|---|---|---|
| Polyether polyol | Voranol 2120P | Dow | Polypropylene glycol), Mn=2000 |
| Polyester polyol (PE2000-1) | CTP-B2000-BS | XuChuan | Aliphatic linear, sebacic acid and butanediol, Mn=2000, Tm=60.84°C, 100%bio-based |
| Polyester polyol (PE2000-2) | PE-6256 | Huafeng | Aliphatic linear, Dodecanedioic acid and 1,3-propylene glycol, Mn=2000, Tm=68.01°C,100% bio-based |
| Polyester polyol (PE2000-3) | PE06156 | HuaFeng | Aliphatic linear polyester polyol, sebacic acid and succinic acid and 1,3-propylene glycol, Mn=2000, Tm=22.70°C,100% bio-based |
| Polyester polyol | PE-6056 | HuaFeng | Aliphatic linear polyester polyol, sebacic |
| (PE2000-4) | | | acid and 1, 3-propylene glycol, Mn=2000, Tm=58.31°C,100% bio-based |
| Polyester polyol (PE2000-5) | CTP-B2000-BJS | XuChuan | Aliphatic linear polyester polyol, sebacic acid and succinic acid and butanediol, Mn=2000, Tm=79.23°C, 100%bio-based |
| Polyester polyol | Priplast 3238 | Cargill | Dimeric acid aliphatic polyester polyols, Mn=2000, 100%bio-based |
| Acrylic resin (hydroxyl functionalized) | MB3068 | Dianal | Mw=41000, Tg=51 °C ; a number average D90 particle size of 190 µm, with a hydroxyl value of 8 mg KOH/g |
| Isocyanate | DESMODUR 44C | Covestro | 4,4'-diphenylmethane diisocyanate |
| Antioxidants | Irganox 1010 | Basf | Mw=1177.7 |
| Catalyst | DMDEE | Huntsman | Dimorpholinyl diethyl ether |

| Raw materials | Onset crystallization temperature (°C) | Tm (°C) |
|---|---|---|
| PE2000-1 | 47.03 | 60.84 |
| PE2000-2 | 44.08 | 68.01 |
| PE2000-3 | -4.87 | 22.70 |
| PE2000-4 | 27.86 | 58.31 |
| PE2000-5 | 20.13 | 79.23 |

### Adhesive Composition

A sample of the adhesive composition was prepared by the following method. According to the weight percentages of each component in Table 1, the polyether polyol, the crystalline polyester polyol, the non-crystalline polyester polyol, and the acrylic resin components were firstly added to a reactor, heated in nitrogen atmosphere to 150 °C, and vacuumized for 2-3 hours to remove water. Then, the temperature was lowered to 100 °C. Dry nitrogen gas was introduced, and the polyisocyanate and the antioxidant were added. The reaction was performed by stirring at 115 °C under vacuum for 2 hours. The catalyst was added, and the reaction was further performed by stirring under vacuum for 30 minutes. Then, the resultant was discharged into a 30 ml high-temperature resistant plastic needle tube, defoamed under vacuum for 30 minutes at 115 °C, and then sealed and cooled down.

### Test methods

Viscosity (mPa.s): Determination by ISO 2555 carried out at 110 °C using a DVT-II type Brookfield viscometer utilizing a 27 # rotor. **Initial tack (MPa) (it could also be called as green strength):**

Two polycarbonate sheets of 100 mm × 25 mm × 3 mm were prepared as substrates. In the center of one of the polycarbonate sheets, two adhesive lines with an interval of 11 mm parallel to the length of the substrates were coated, and limit steel wires with a diameter of 0.2 mm were placed on both sides of the two adhesive lines. Then, the other polycarbonate sheet was pressed in a 90-degree direction onto the first polycarbonate sheet to form a cross-shaped laminated body and pressed together, so that each adhesive strip after pressing was 25 mm in length and 1 mm in width. The laminated body was placed in an environment of 23 °C and 50% relative humidity for 20 minutes and then a cross tensile test was performed. Five samples of the same formula were prepared and tested, and then took the average value.

**Bonding strength (Mpa):** A cross-shaped laminated body was prepared according to the same method for testing the initial tack and was placed in an environment of 23 °C and 50% relative humidity for 24 hours, and then the cross tensile test was performed. Five samples of the same formula were prepared and tested, and then took the average value.

**Thermal stability (6h viscosity growth rate/%):** At 110 °C, a sample was placed into a DVT-II type Brookfield viscometer (27 # rotor). The first occurrence of the plateau value was recorded. Then, the viscosity value after 6 hours was recorded. Growth rate of viscosity was calculated and expressed in percentage.

**Form:** At 23°C and 50% RH. Apply 0.13 g of adhesive on a glass substrate. Put the substrate vertically for 20s. Record the adhesive sagging distance after 20s. A sagging distance between 16 to 28 mm was marked normal, otherwise it is indicated anormal.

**Nozzle-clog test:** A VERMES MDC3200 glue dispenser was used for continuous glue dispensing, and a nozzle with a diameter of 0.1 mm was selected. The glue dispensing was performed for 5 s. After that, there was an interval of 5 s, and then the glue dispensing was performed for 5 s again. Such cycle was repeated until a 30 ml glue was dispensed off in about 3 h. The nozzle-clog at the nozzle was observed every 10 min, and the times of nozzle-clog within 3 hours was recorded. 5 glues were used for glue dispensing for each kind of the sample and the total times of nozzle-clog were recorded.

**The bio-based content of the composition:** the sum of (bio-based content of every component× the weight percentages of the component in the composition).

### Ageing test□

Two polycarbonate sheets of 100 mm × 25 mm × 3 mm were prepared as substrates. In the center of one of the polycarbonate sheets, two adhesive lines with an interval of 11 mm parallel to the length of the substrates were coated, and limit steel wires with a diameter of 0.2 mm were placed on both sides of the two adhesive lines. Then, the other polycarbonate sheet was pressed in a 90-degree direction onto the first polycarbonate sheet to form a cross-shaped laminated body and pressed together, so that each adhesive strip after pressing was 25 mm in length and 1 mm in width. The laminated body was placed in an environment of 23 °C and 50% relative humidity for 24 hrs. Then place them in an environment of 85°C and 85% relative humidity for 21 days. Finally, place the samples at room temperature for 4 hrs, a cross tensile test was performed. Five samples of the same formula were prepared and tested, and then took the average value.

### Bubble performance

The bubble performance could be observed by a microscope. Bubble performance could be performed as follows: A VERMES MDC3200 glue dispenser was used for continuous glue dispensing, and a nozzle with a diameter of 0.1 mm was selected. Then dispense 1mm width adhesive bead line on stainless steel and cure under 25°C, 65%RH for 4 hrs. The bubbles generated in bead line can be observed through a microscope. Judging bubble performance based on whether bubbles are generated. If there is any bubble in the bead line, it was marked as not ok.

### Open time

Dispensing 1mm adhesive bead on PC substrate, touch the surface of PUR every 10 seconds with release paper until the release paper is not stuck by the adhesive. Take this time as the open time.

### Shear creep resistance

Two polycarbonate sheets of 100 mm × 25 mm × 3 mm were prepared as substrates, there is a 6mm diameter hole in the middle of one end of each substrate, the center of hole is 15mm away from the top edge. Dispensing a certain amount of bead adhesive on the center of first substrate, and two limit steel wires with a diameter of 0.1 mm were placed around bead adhesive. Then, the other polycarbonate sheet was pressed onto the first substrate, ensuring that second substrate was parallel to the first one and holes in the two substrates are not covered. Placed 50g weight on the second substrate, making sure that the bead formed as a circle with 8.5mm diameter. The laminated body was placed in an environment of 23 °C and 50% relative humidity for 120 hrs. Finally, hang one end of the laminated body in an environment of 85°C and 85% relative humidity, a 4KG weight block was placed on hole of the other end. Once the adhesive de-bond, the weights will fall off. Record the duration before the weight fall. Five samples of the same formula were prepared and tested, and then took the average value.

| **Raw materials** | **Ex. 1** | **Ex.2** | **Ex. 3** | **Ex.4** | **Ex.5** |
|---|---|---|---|---|---|
| Voranol 2120P | 23.5 | 23 | 23 | 23 | 23 |
| PE2000-1 | 20 | | 15 | 15 | |
| PE2000-2 | - | 24 | - | - | 23.5 |
| PE2000-3 | 9 | 6 | - | - | |
| PE2000-4 | - | - | 15 | - | |
| PE2000-5 | - | - | - | 15 | 8 |
| Priplast 3238 | 20 | 20 | 20 | 20 | 18 |
| MB3068 | 8 | 8 | 8 | 8 | 8 |
| DESMODUR 44C | 19.32 | 18.82 | 18.82 | 18.82 | 19.32 |
| Irganox 1010 | 0.1 | 0.1 | 0.1 | 0.1 | 0.1 |
| DMDEE | 0.08 | 0.08 | 0.08 | 0.08 | 0.08 |
| Total | 100 | 100 | 100 | 100 | 100 |

| **Results** | | | | | |
|---|---|---|---|---|---|
| N(NCO)/ n(OH) | 2.10 | 2.03 | 2.03 | 2.03 | 2.10 |
| Viscosity/mPa.s | 2238 | 2290 | 2335 | 2400 | 2080 |
| Green strength/M Pa | 0.45 | 0.48 | 0.22 | 0.23 | 0.47 |
| Bonding strength/M Pa | 9.44 | 10.14 | 7.42 | 7.65 | 7.97 |
| 6h viscosity growth rate/% | 24.5 | 27.9 | 20.56 | 25.63 | 24.68 |
| Form | normal | normal | normal | normal | normal |
| Nozzle clog (times) | 0 | 0 | 0 | 0 | 0 |
| Aging test /MPa | 4.84 | 3.52 | 4.31 | 4.54 | 4.08 |
| Bubble performance | OK | OK | OK | OK | OK |
| Open time | 4'30" | 7'20" | 7'30" | 6'20" | 7' |
| Shear aging resistance (h) | | | 7 | 18 | 16 |
| Bio-based content | 49% | 50% | 50% | 50% | 49.5% |

| | | | | | |
|---|---|---|---|---|---|
| As is shown in the table, Ex.1-5 exhibit good dispensing performance, high thermal stability, suitable open time, good ageing and shear creep resistance, and no bubble formation during curing. | | | | | |

## Claims

1. Reactive polyurethane hot-melt adhesive composition prepared by a raw material comprising the following components:
- a polyether polyol component (A) comprising at least one polyether polyol;
- a polyester polyol component (B) comprising :
∘ at least one crystalline polyester polyol (B1) having an onset crystallization temperature ranging from 35°C to 55°C;
∘ at least one crystalline polyester polyol (B2) having an onset crystallization temperature lower than 30°C;
∘ at least one non-crystalline polyester polyol (B3);
- an acrylic resin component (C) comprising at least one acrylic resin (C1), the acrylic resin (C1) comprising an active functional group which is reactive with an isocyanate group, the acrylic resin (C1) having a number average D90 particle size of no greater than 350 µm; and
- a polyisocyanate component (D) comprising at least one polyisocyanate.

2. Reactive polyurethane hot melt adhesive composition according to claim 1, wherein the polyether polyol has a number average molecular weight in the range of 200 to 8 000 g/mol, preferably in the range of 500 to 5 000 g/mol more preferably in the range of 700 to 3 000 g/mol, more advantageously in the range of 1 500 to 2 800 g/mol.

3. Reactive polyurethane hot melt adhesive composition according to claim 1, wherein
the number average molecular weight of the polyester polyol (B1) is in the range of 1 000 to 10 000 g/mol, preferably in the range of 1 500 to 6 000 g/mol, more preferably in the range of 1 500 to 4 000 g/mol, more advantageously in a range of 1 500 to 2 800 g/mol, and/or
the number average molecular weight of the polyester polyol (B2) is in the range of 1 000 to 10 000 g/mol, preferably in the range of 1 500 to 6 000 g/mol, more preferably in the range of 1 500 to 4 000 g/mol, more advantageously in a range of 1 500 to 2 800 g/mol, and/or
the number average molecular weight of the polyester polyol (B3) is in the range of 1 000 to 8 000 g/mol, preferably in the range of 1 500 to 7 000 g/mol, more preferably in the range of 1 600 to 4 000 g/mol, more advantageously in a range of 1 800 to 3 000 g/mol.

4. Reactive polyurethane hot melt adhesive composition according to anyone of claim 1 to 3, wherein the total content of the polyether polyol component (A) is in a range of 15 to 35 wt%, preferably in the range of 18 to 30 wt%, even more preferably in the range of 20 to 29 wt%, based on the total weight of the components (A) to (D).

5. Reactive polyurethane hot melt adhesive composition according to anyone of claim 1 to 4, wherein the crystalline polyester polyol (B1) has an onset crystallization temperature ranging from 38°C to 55°C, preferably from 40°C to 50°C.

6. Reactive polyurethane hot melt adhesive composition according to anyone of claim 1 to 5, wherein the polyester polyol (B1) has a melting point in a range of 40°C to 120°C, preferably of 45°C to 100°C, and more preferably of 50°C to 80°C.

7. Reactive polyurethane hot melt adhesive composition according to anyone of claim 1 to 6, wherein the polyester polyol (B1) is prepared by condensation reaction between at least one dicarboxylic acid selected from sebacic acid, dodecanedioic acid, and mixtures thereof, and at least one diol selected from 1,3-propanediol, and 1,4-butanediol, and mixtures thereof.

8. Reactive polyurethane hot melt adhesive composition according to anyone of claim 1 to 7, wherein the polyester polyol (B1) has a bio-based content greater than or equal to 50%, preferably greater than or equal to 80%, and even more preferably the polyester polyol (B1) is 100% bio-based.

9. Reactive polyurethane hot melt adhesive composition according to anyone of claim 1 to 8, wherein the total content of polyester polyol (B1) ranges from 2 to 40 wt%, preferably from 5 to 35 wt% based on the total weight of components (A) to (D).

10. Reactive polyurethane hot melt adhesive composition according to anyone of claim 1 to 9, wherein the crystalline polyester polyol (B2) has an onset crystallization temperature ranging from -20°C to less than 30°C, preferably from -15°C to less than 28°C, more preferably from -10°C to less than 25°C.

11. Reactive polyurethane hot melt adhesive composition according to anyone of claim 1 to 10, wherein the polyester polyol (B2) is prepared by condensation reaction between at least one dicarboxylic acid selected from sebacic acid, succinic acid, and mixtures thereof, and at least one diol selected from 1,3-propanediol, and 1,4-butanediol, and mixtures thereof.

12. Reactive polyurethane hot melt adhesive composition according to anyone of claim 1 to 11, wherein the total content of polyester polyol (B2) ranges from 2 to 40 wt%, preferably from 2 to 30 wt% based on the total weight of components (A) to (D).

13. Reactive polyurethane hot melt adhesive composition according to anyone of claim 1 to 12, wherein the non-crystalline polyester polyol (B3) is obtained by reacting a dicarboxylic acid (an aromatic dicarboxylic acid and/or an aliphatic dicarboxylic acid) with a polyol, the dicarboxylic acid being selected from the group consisting of adipic acid, succinic acid, azelaic acid, sebacic acid, dodecanedioic acid, tetradecanedioic acid, octadecane dioic acid, isophthalic acid, terephthalic acid, dimerized fatty acid, trimerized fatty acid, and mixtures thereof, and the polyol being selected from linear aliphatic diol having from 2 to 12 carbon atoms, more preferably from 2 to 6 carbon atoms.

14. Reactive polyurethane hot melt adhesive composition according to anyone of claim 1 to 13, wherein the content of polyester polyol (B3) ranges from 5 to 40 wt%, preferably from 10 to 35 wt% based on the total weight of components (A) to (D).

15. Reactive polyurethane hot melt adhesive composition according to anyone of claim 1 to 14, wherein in the polyester polyol component (B), the weight ratio of the crystalline polyester polyol (B1) to the crystalline polyester polyol (B2) is greater than 0.8, preferably ranges from 0.8 to 6.

16. Reactive polyurethane hot melt adhesive composition according to anyone of claim 1 to 15, wherein in the polyester polyol component (B), the melting temperature of polyester polyol (B2) is higher than 56°C, and the weight ratio of the crystalline polyester polyol (B1) to the crystalline polyester polyol (B2) is higher than 0.8, preferably higher than 0.9.

17. Reactive polyurethane hot melt adhesive composition according to anyone of claim 1 to 15, wherein in the polyester polyol component (B), the melting temperature of polyester polyol (B2) is lower than 25°C, and the weight ratio of the crystalline polyester polyol (B1) to the crystalline polyester polyol (B2) is higher than 1, preferably higher than 1.5.

18. Reactive polyurethane hot melt adhesive composition according to anyone of claim 1 to 17, wherein the acrylic resin (C1) has number average D90 particle size no greater than 250 µm, preferably no greater than 210 µm, more preferably in a range of 100 to 210 µm, most preferably in a range of 120 to 200 µm, extremely preferably in a range of 160 to 200 µm.

19. Reactive polyurethane hot melt adhesive composition according to anyone of claim 1 to 18, wherein the acrylic resin (C1) contains hydroxyl functional group.

20. Reactive polyurethane hot melt adhesive composition according to anyone of claim 1 to 19, wherein the acrylic resin (C1) has a glass transition temperature (Tg) of 30 to 110°C, preferably 40 to 80°C, more preferably 45 to 58°C.

21. Reactive polyurethane hot melt adhesive composition according to anyone of claim 1 to 20, **characterized in that** it is prepared by a raw material comprising the following components:
- from 20% to 29 % by weight of polyether polyol component (A),
- from 33% to 55% by weight of polyester polyol component (B),
- from 5% to 15 % by weight of acrylic resin (C1),
- from 16 % to 23% by weight of polyisocyanate component (D),
wherein the equivalent ratio of the isocyanate groups to hydroxyl groups (NCO/OH) of the above components is from 1.2 to 6.

22. Article, comprising a first substrate and an adhesive layer on the first substrate formed by curing the reactive polyurethane hot-melt adhesive composition as defined in anyone of claims 1 to 21.

23. Use of a polyester polyol in a reactive polyurethane hot melt adhesive composition for acoustic assembly, wherein the polyester polyol is prepared by a bio-based dodecanedioic acid and a bio-based 1,3-propylene glycol.

24. Use of a reactive polyurethane hot melt adhesive composition in acoustic assembly, wherein the composition contains a urethane prepolymer having an isocyanate group, which is the reaction product of a polyol and a polyisocyanate the polyol comprising a polyester polyol obtained from bio-based dodecanedioic acid and bio-based 1,3-propylene glycol.
